Europäisches Patentamt

European Patent Office

Office européen des brevets

(19)

(11) **EP 1 178 638 A1**

(12) **EUROPEAN PATENT APPLICATION**
published in accordance with Art. 158(3) EPC

(43) Date of publication:
06.02.2002 Bulletin 2002/06

(51) Int Cl.7: **H04L 27/00**, H04J 13/00,
H04Q 7/38

(21) Application number: 01912184.7

(22) Date of filing: 08.03.2001

(86) International application number:
PCT/JP01/01808

(87) International publication number:
WO 01/67698 (13.09.2001 Gazette 2001/37)

(84) Designated Contracting States:
AT BE CH CY DE DK ES FI FR GB GR IE IT LI LU
MC NL PT SE TR
Designated Extension States:
AL LT LV MK RO SI

(30) Priority: 09.03.2000 JP 2000065008

(71) Applicant: MATSUSHITA ELECTRIC INDUSTRIAL
CO., LTD.
Kadoma-shi, Osaka 571-8501 (JP)

(72) Inventor: IOCHI, Hitoshi
Yokosuka-shi, Kanagawa 239-0831 (JP)

(74) Representative:
Grünecker, Kinkeldey, Stockmair &
Schwanhäusser Anwaltssozietät
Maximilianstrasse 58
80538 München (DE)

(54) **PREAMBLE RECEIVING DEVICE AND PREAMBLE RECEIVING METHOD**

(57) Coherent detection correlation value calculation section 201 calculates correlation values for signatures in a received preamble. Non-coherent detection (j-segment) correlation value calculation section 202 calculates correlation values for the same signature by non-coherent detection. Maximum value detection section 203 detects a maximum correlation value from among the correlation values calculated by coherent detection and non-coherent detection. When the maximum correlation value is greater than a predetermined threshold, threshold determining section 104 recognizes, using the signature corresponding to this maximum correlation value, that the preamble generated and sent by a communication terminal apparatus corresponding to this signature has been received reliably.

RECEIVED SIGNAL

201 COHERENT DETECTION CORRELATION VALUE CALCULATION SECTION

202 NON-COHERENT DETECTION (j-SEGMENT) CORRELATION VALUE CALCULATION SECTION

$r_{15}^c$ •••• $r_0^c$     $r_{15}^{nj}$ •••• $r_0^{nj}$     203

MAXIMUM VALUE DETECTION SECTION

204 THRESHOLD DETERMINING SECTION

PREAMBLE DETECTION RESULT (SIGNATURE NUMBER)

FIG.2

## Description

Technical Field

The present invention relates to a mobile station apparatus (communication terminal apparatus) that carries out random access using predetermined signatures and a preamble reception apparatus mounted on a base station apparatus in a mobile communication system.

Background Art

In a digital mobile communication system, when starting a communication, a mobile station apparatus carries out a communication called "random access" with a base station apparatus equipped with a preamble reception apparatus. This random access will be explained by taking a case where the base station apparatus incorporates a preamble reception apparatus described in a 3GPP input document "Proposal for RACH Preambles" (R1-99893, Motorola and Texas Instruments ) as an example.

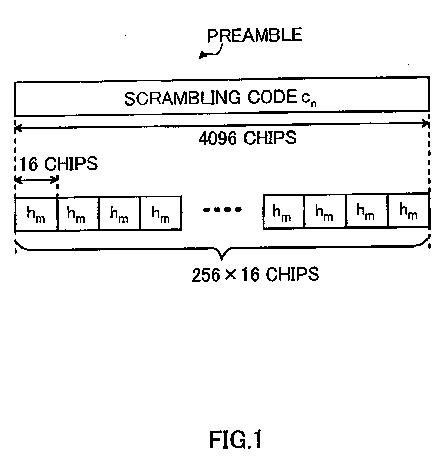

FIG.1 is a schematic view showing an example of a preamble that is sent by the mobile station apparatus in random access. As shown in FIG.1, a preamble sent by the mobile station apparatus at the time of random access is created by multiplying a $(16 \times 256)$ chip code, that is, a code made up of a chain of 256 signature $h_m$'s each consisting of 16 chips, by 4096-chip scrambling code $C_n$.

At the time of random access, the mobile station apparatus generates a preamble as shown in FIG.1 using any one of 16 kinds of $h_m$ and sends the preamble generated. The preamble sent by the mobile station apparatus is received by a base station apparatus that supports scrambling code $C_n$ multiplied on this preamble.

This base station apparatus is equipped with a preamble reception apparatus. This preamble reception apparatus calculates a correlation value for each signature using a received signal and then detects correlation values that exceed a threshold from among the calculated correlation values. The correlation values are calculated using any one of coherent detection, non-coherent detection or delay detection. After this, for a signature whose correlation value exceeds the threshold, this preamble reception apparatus recognizes that the preamble corresponding to this signature has been received reliably. That is, a signature whose correlation value exceeds the threshold is detected by the preamble reception apparatus. On the contrary, for a signature whose correlation value does not exceed the threshold, this preamble reception apparatus recognizes that the preamble corresponding to this signature has not been received reliably. That is, a signature whose correlation value does not exceed the threshold value is not detected by the preamble reception apparatus.

After this, the base station apparatus sends a signal indicating that a preamble corresponding to a signature whose correlation value exceeds the threshold has been received reliably through a predetermined channel. Each mobile station apparatus that sent a preamble before demodulates the above-described signal received through the above predetermined channel and determines whether or not the previously sent preamble has been received reliably by the base station apparatus.

Of the mobile station apparatuses that sent a preamble before, those mobile station apparatuses whose preamble has been received by the base station apparatus finish random access and start a normal communication. On the contrary, of the mobile station apparatuses that sent a preamble before, those mobile station apparatuses whose preamble has not been received by the base station apparatus continue random access and resend the above-described preamble.

However, the mobile communication system using the above-described preamble reception apparatus has a problem that the probability that a preamble sent by each mobile station apparatus will be detected (that is, probability of detecting a preamble) depends on the propagation environment.

More specifically, when an apparatus that calculates correlation values using coherent detection is used as the preamble reception apparatus, if the propagation environment is bad (for example, when a frequency offset is large or during high-speed fading), not only the probability of preamble detection deteriorates, but also the probability of erroneously detecting preambles (that is, probability of erroneous preamble detection) will increase.

On the other hand, when an apparatus that calculates correlation values using non-coherent detection or delay detection is used as the preamble reception apparatus, if the propagation environment is favorable ( for example, when a frequency offset is small or during low-speed fading), not only the probability of preamble detection deteriorates but also the probability of erroneous preamble detection increases compared to the case where the apparatus that calculates correlation values using coherent detection is used as the preamble reception apparatus.

Disclosure of Invention

It is an object of the present invention to provide a preamble reception apparatus capable of favorably maintaining the probability of preamble detection and probability of erroneous detection independently of the propagation environment.

The present inventor has come up with the present invention by discovering that while a correlation value for a predetermined known signal (signature) calculated using one type of coherent detection decreases under influences of the propagation environment, a correlation value for the above-described predetermined known signal calculated using another type of coherent detection may not have decreased.

The object of the present invention will be attained by receiving a communication start request signal (preamble) generated and sent by a communication terminal apparatus using a known signal (signature) specific to the communication terminal apparatus and calculating correlation values for each known signal for every detection process using the received preamble through a plurality of mutually different detection processes (for example, coherent detection, non-coherent detection or delay detection).

Brief Description of Drawings

FIG.1 is a schematic view showing an example of a preamble sent by a mobile station apparatus in random access;

FIG.2 is a block diagram showing a configuration of a preamble reception apparatus according to Embodiment 1 of the present invention;

FIG.3 is a block diagram showing a configuration of a coherent detection correlation value calculation section in the preamble reception apparatus according to Embodiment 1 of the present invention;

FIG.4 is a block diagram showing a configuration of a non-coherent detection correlation value calculation section in the preamble reception apparatus according to Embodiment 1 of the present invention;

FIG.5 is a block diagram showing a configuration of a preamble reception apparatus according to Embodiment 2 of the present invention;

FIG.6 is a block diagram showing a configuration of a preamble reception apparatus according to Embodiment 3 of the present invention;

FIG.7 is a block diagram showing a configuration of a preamble reception apparatus according to Embodiment 4 of the present invention;

FIG.8 is a block diagram showing a configuration of a delay detection correlation value calculation section 701 in the preamble reception apparatus according to Embodiment 4 of the present invention;

FIG.9 is a block diagram showing a configuration of a preamble reception apparatus according to Embodiment 5 of the present invention; and

FIG.10 is a block diagram showing a configuration of a preamble reception apparatus according to Embodiment 6 of the present invention.

Best Mode for Carrying out the Invention

With reference now to the attached drawings, embodiments of the present invention will be explained in detail below.

(Embodiment 1)

This embodiment will describe a case where correlation values for all signatures are calculated using two systems of coherent detection and non-coherent detection.

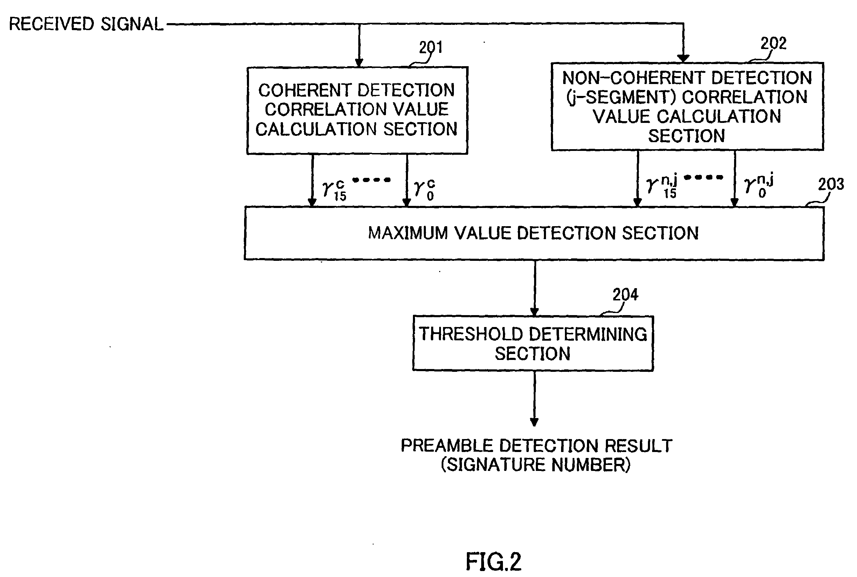

FIG.2 is a block diagram showing a configuration of a preamble reception apparatus according to Embodiment 1 of the present invention. As shown in FIG.2, the preamble reception apparatus according to this embodiment comprises coherent detection correlation value calculation section 201, non-coherent detection correlation value calculation section 202, maximum value detection section 203 and threshold determining section 204.

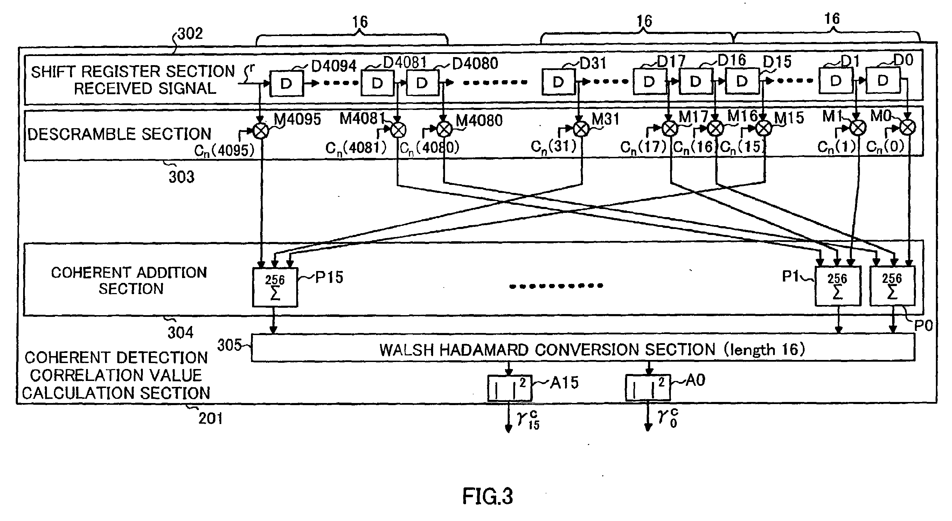

FIG.3 is a block diagram showing a configuration of coherent detection correlation value calculation section 201 in the preamble reception apparatus according to Embodiment 1 of the present invention. The coherent detection correlation value calculation section 201 shown in FIG.3 is provided with shift register section 302, descramble section 303, coherent addition section 304, Walsh Hadamard conversion section 305 and absolute value calculation sections A0 to A15.

In FIG.3, correlation value calculation section 201 has the function of calculating correlation values by coherent detection and is provided with shift register section 302, descramble section 303, coherent addition section 304, Walsh Hadamard conversion section 305 and absolute value calculation sections A0 to A15.

Shift register section 302 is provided with 4095 data flip flops (hereinafter referred to as "flip flops") D0 to D4094 obtained by subtracting 1 from 4096 (16 chips × 256 signature $h_m$'s). Here, flip flops D0 to D4094 are serially connected.

Descramble section 303 is provided with 4096 multipliers M0 to M4095 corresponding to 16 chips × 256 signature $h_m$'s.

Of multipliers M0 to M4095, multipliers M0 to M4094 are connected to the output sides of flip flops D0 to D4094 respectively and multiplier 4095 is connected to the input side of flip flop D4094.

Coherent addition section 304 is provided with adders P0 to P15. When 4096 multipliers M0 to M4095 are divided into 256 groups each consisting of 16 multipliers from the first multiplier, adder P0 is connected to the output sides of the first multipliers of the respective groups, multipliers M0, M16, ⋯ M4080, adder P1 is connected to the output sides of the second multipliers of the respective groups, multipliers M1, M17, ⋯ M4081, and in the same way adder P15 is connected to the output sides of the 16th multipliers of the respective groups, multipliers M15, M31, ⋯ M4096. That is, adders P0 to P15 are each connected to the outputs of 256 multipliers.

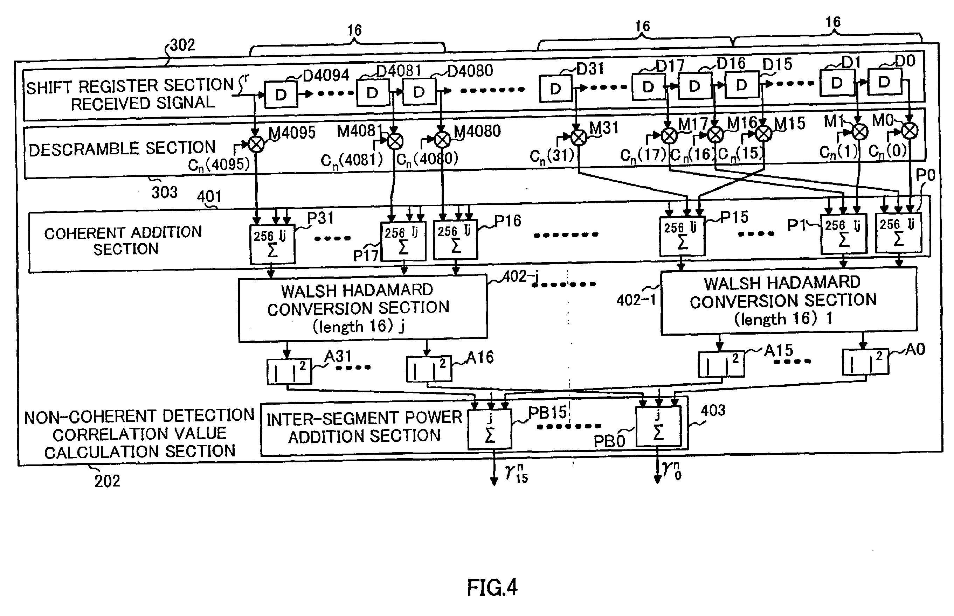

FIG.4 is a block diagram showing a configuration of non-coherent detection correlation value calculation section 202 in the preamble reception apparatus according to Embodiment 1 of the present invention. In FIG.4, the same configurations as those in FIG.3 are assigned the same reference numerals in FIG.3 and detailed explanations thereof will be omitted.

Non-coherent detection correlation value calculation section 202 shown in FIG.4 has a configuration to calculate correlation values by non-coherent detection With j segments (the number of segments j=2 is assumed in this embodiment) and is provided with shift register section 302, descramble section 303, coherent addition section 401, Walsh Hadamard conversion sections 402-1 to 402-j, absolute value calculation sections A0 to A31 and inter-segment power addition section 403.

Since the number of segments j=2 is assumed in this embodiment, coherent addition section 401 is provided with adders P0 to P31. When 4096 multipliers M0 to M4095 are divided into 256 groups each consisting of 16 multipliers from the first multiplier, adder P0 is connected to the output sides of the first multipliers of the respective groups, multipliers M0, M16, ⋯ M2032, adder P1 is connected to the output sides of the second multipliers of the respective groups, multipliers M1, M17, ⋯ M2033, and in the same way adder P15 which is the 16th adder is connected to the output sides of the 16th multipliers of the respective groups, multipliers M15, M31, ⋯ M2047.

17th adder P16 is connected to the output sides of the first multipliers of the respective groups, multipliers M2048, M2064, ⋯ M4080, 18th adder P17 is connected to the output sides of the second multipliers of the respective groups, multipliers M2049, M2065, ⋯ M4081 and in the same way, 32nd adder P31 is connected to the output sides of the 16th multipliers of the respective groups, multipliers M2063, M2079, ⋯ M4095. That is, adders P0 to P31 are each connected to the outputs of 128 multipliers.

Inter-segment power addition section 403 is provided with adders PB0 to PB15. Adder PB0 is connected to the output sides of first A0 and A16 of absolute value calculation sections A0 to A15 of the first group and absolute value calculation sections A16 to A31 of the second group and adder PB1 (not shown) is connected to the output sides of second A1 and A17, and in the same way, 16th adder PB15 is connected to the output sides of 16th A15 and A31.

Then, an operation of the preamble reception apparatus in the above configuration in random access will be explained taking a case where this preamble reception apparatus is mounted on the base station apparatus as an example.

Each mobile station apparatus that carries out random access to the above-described base station apparatus generates, for example, a preamble as shown in FIG.1 and sends the preamble generated to the base station apparatus. Here, the preamble sent from each mobile station apparatus corresponds to a signal for requesting the base station apparatus for the start of a communication (communication start request signal). More specifically, as shown in FIG. 1, a preamble sent from each mobile station apparatus at the time of random access is generated by multiplying a code of (16 × 256) chips, that is, a code made up of a chain of 256 signature (known signal) $h_m$'s each consisting of 16 chips, by 4096-chip scrambling code $C_n$. Signature $h_m$ used by the mobile station apparatus is a known signal specific to this mobile station apparatus. Furthermore, an Hadamard code with a length of 16 is used as signature $h_m$ and preamble $s_{mn}$ corresponding to mth signature $h_m$ (m=0, 1, ⋯, 15) and nth scrambling code $C_n$ is expressed by expression (1) below:

$$s_{mn}(k) = c_n(k) \sum_{i=0}^{255} h_m(k - 16i) \quad k = 0, 1, \ldots, 4095 \qquad (1)$$

The preamble sent by each mobile station apparatus is received by the base station apparatus equipped with the preamble reception apparatus shown in FIG.2 through a propagation path. This signal received (received signal) by the base station apparatus is sent to the preamble reception apparatus shown in FIG.2.

According to FIG.2, the received signal is output to coherent detection correlation value calculation section 201 and non-coherent detection correlation value calculation section 202. First, an operation of coherent detection correlation value calculation section 201 will be explained with reference to FIG.3.

When received signal (preamble) r is input to shift register section 302, this received signal r is sequentially shifted through flip flops D0 to D4096 by each flip flop holding and outputting the received signal to the next stage and these signals are output to multipliers M0 to M4095 of descramble section 303.

Multipliers M0 to M4095 multiply the respective output signals of the shift register section 302 by corresponding scrambling code $C_n$ and output these multiplication results to respective adders P0 to P15 of above-described coherent addition section 304 to which multipliers M0 to M4095 are connected. The result of descrambling preamble r(k) received by the base station apparatus with respect to the mth signature is expressed by Expression (2) below:

$$y_m(l) = \sum_{i=0}^{15} c_n(i+16l) \cdot r(i+16l) h_m(i) \quad l = 0,1,...,255 \qquad (2)$$

Adders P0 to P15 add up 256 multiplication results and output these addition results to Walsh Hadamard conversion section 305.

Walsh Hadamard conversion section 305 carries out a Walsh Hadamard conversion for every addition result, that is, every signature $h_m$ and outputs these results to absolute value calculation sections A0 to A15. Absolute value calculation sections A0 to A15 calculate the squares the absolute values of the respective results to obtain correlation values $\gamma_0^c$ to $\gamma_{15}^c$ and output these correlation values to maximum value detection section 203. The correlation values calculated by respective absolute value detection sections A0 to A15 are expressed by expression (3) below, where $\gamma_m^c$ corresponds to a correlation value by coherent detection with respect to mth signature $h_m$.

$$\gamma_m^c = \left| \sum_{l=0}^{255} y_m(l) \right|^2 \qquad (3)$$

Correlation values $\gamma_0^c$ to $\gamma_{15}^c$ calculated by correlation value calculation section 201 are output to maximum value detection section 203. This completes the explanation of the operation of coherent detection correlation value calculation section 201.

Then, an operation of non-coherent detection correlation value calculation section 202 will be explained with reference to FIG.4. Coherent addition section 401 carries out a coherent addition within a segment and outputs this result to Walsh Hadamard conversion sections 402-1 to 402-j. That is, 128 multiplication results added up by respective adders P0 to P15 of the first group are output to Walsh Hadamard conversion section 402-1 and 128 multiplication results added up by respective adders P16 to P31 of the second group are output to Walsh Hadamard conversion section 402-j.

Walsh Hadamard conversion section 402-1 carries out a conversion for every addition result above, that is, for every signature $h_m$ and outputs these results to absolute value calculation sections A0 to A15 of the first group. Walsh Hadamard conversion section 402-j carries out a conversion for every addition result above, that is, for every signature $h_m$ and outputs these results to absolute value calculation sections A16 to A31 of the second group.

Absolute value calculation sections A0 to A15 of the first group and absolute value calculation sections A16 to A31 of the second group each obtain the squares of the absolute values of the respective correlation values to calculate power values and output these power values to inter-segment power addition section 403.

Inter-segment power addition section 403 adds up power values corresponding to j segments for every signature $h_m$ to calculate correlation values $\gamma_0^n$ to $\gamma_{15}^n$ shown in following expression (4) and outputs these correlation values to maximum value detection section 203. Here, $\gamma_m^n$ corresponds a correlation value by non-coherent detection with respect to mth signature $h_m$ when the number of segments for carrying out a coherent addition is j.

$$\gamma_m^n = \sum_{i=0}^{j-1} \left| \sum_{l=0}^{256/j-1} y_m\left(l+(256/j)i\right) \right|^2$$

$$(4)$$

This completes the explanation of the operation of non-coherent detection correlation value detection section 202.

Correlation values $\gamma_0^c$ to $\gamma_{15}^c$ calculated by coherent detection correlation value detection section 201 and non-correlation values $\gamma_0^{n,j}$ to $\gamma_{15}^{n,j}$ calculated by non-coherent detection correlation value detection section 202 are output to maximum value detection section 203.

Maximum value detection section 203 detects a correlation value of a maximum size (hereinafter referred to as "maximum correlation value" ) from among correlation values $\gamma_0^c$ to $\gamma_{15}^c$ and $\gamma_0^{n,j}$ to $\gamma_{15}^{n,j}$. The detected maximum correlation value is output to threshold determining section 204 together with the corresponding signature number.

Threshold determining section 204 compares the maximum correlation value detected by maximum value detection section 203 and a threshold. In the case where this maximum correlation value is greater than the threshold, it is recognized that the preamble corresponding to the signature number from maximum value detection section 203 has been received reliably. That is, when this maximum correlation value is greater than the threshold, this preamble reception apparatus detects the preamble corresponding to the signature number from maximum value detection section 203.

On the other hand, when focused on the signature corresponding to the correlation value not detected by maximum value detection section 203 of correlation values $\gamma_0^c$ to $\gamma_{15}^c$ and $\gamma_0^{n,j}$ to $\gamma_{15}^{n,j}$, this preamble reception apparatus detects that the preamble corresponding to this signature has not been received reliably.

Then, the signature number corresponding to the maximum correlation value determined by threshold determining section 204 to be greater than the threshold is output to a transmission section (not shown) of the base station apparatus equipped with this preamble reception apparatus. This transmission section sends a signal indicating that the preamble corresponding to the signature number from threshold determining section 204 has been received reliably via a predetermined channel.

Each mobile station apparatus that sent a preamble before demodulates the above-described signal received through the above-described predetermined channel and thereby determines whether the previously sent preamble has been received reliably by the base station apparatus or not.

Of the mobile station apparatuses that sent a preamble before, the mobile station apparatuses whose preamble has been received by the base station apparatus finish random access and start a normal communication. On the contrary, of the mobile station apparatuses that sent a preamble before, the mobile station apparatuses whose preamble has not been received by the base station apparatus continue random access and resend the above-described preamble. This completes the explanations of the operation of the preamble reception apparatus in the above configuration at the time of random access.

As shown above, this embodiment calculates correlation values for all signatures using both systems, coherent detection and non-coherent detection systems. Furthermore, this embodiment detects a maximum correlation value from among all the calculated correlation values and determines whether the detected maximum correlation value is greater than a threshold or not. Hereafter, for the signature corresponding to a maximum correlation value which has been determined to be greater than the threshold, this embodiment recognizes that the preamble corresponding to this signature has been received reliably. Furthermore, for the signature corresponding to a maximum correlation value which has been determined to be not greater than the threshold, this embodiment recognizes that the preamble corresponding to this signature has not been received reliably. Furthermore, it goes without saying that for any signature of all signatures other than the signature corresponding to the maximum correlation value, this embodiment recognizes that the preamble corresponding to this signature has not been received reliably.

Thus, when the propagation environment is bad due to a large frequency offset or high-speed fading, even if a correlation value by coherent detection for a predetermined signature is small, it is highly probable that the correlation value by non-coherent detection for this predetermined signature has not decreased. As a result, it is possible to prevent the probability of detecting the preamble corresponding to this predetermined signature from deteriorating, which in turn can prevent the preambles corresponding to signatures other than this predetermined signature from being detected erroneously (in this case, it is naturally assumed that no preambles corresponding to signatures other than this predetermined signature have been sent by other mobile station apparatuses).

On the contrary, when the propagation environment is good because of a small frequency offset or low-speed fading, even if a correlation value by non-coherent detection for a predetermined signature is small, it is highly probable that the correlation value by coherent detection for this predetermined signature has increased. As a result, it is possible to prevent the probability of detecting the preamble corresponding to this predetermined signature from deteriorating, which in turn can prevent the preambles corresponding to signatures other than this predetermined signature from being detected erroneously (in this case, it is naturally assumed that no preambles corresponding to signatures other than this predetermined signature have been sent by other mobile station apparatuses).

Thus, according to this embodiment, it is possible to maintain the probability of detecting preambles and the probability of erroneous detection at a favorable level irrespective of the propagation environment.

(Embodiment 2)

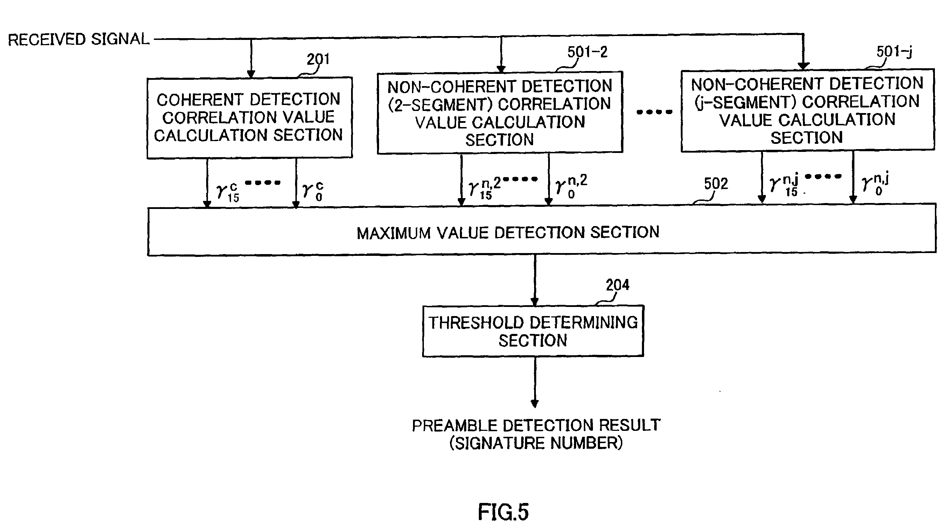

This embodiment will explain a case where correlation values of all signatures are calculated according to a coherent detection system or a plurality of non-coherent detection systems with the number of segments differing from one another with reference to FIG.5. FIG.5 is a block diagram showing a configuration of a preamble reception apparatus according to Embodiment 2 of the present invention. In FIG.5, the same configurations as those of Embodiment 1 (FIG.2) are assigned the same reference numerals in FIG.2 and detailed explanations thereof will be omitted.

The preamble reception apparatus shown in FIG.2 comprises coherent detection correlation value calculation section 201, non-coherent detection (2-segment) correlation value calculation section 501-2 to non-coherent detection (j-segment) correlation value calculation section 501-j having 2 to j segments, respectively, maximum value detection section 502 and threshold determining section 104.

Non-coherent detection (2-segment) correlation value calculation section 501-2 has a similar configuration to that of non-coherent detection correlation value calculation section 202 shown in FIG.4 and calculates correlation values by non-coherent detection for 2 segments. However, this non-coherent detection correlation value calculation section 501-2 has a configuration when j=2 is assumed in FIG.4.

Non-coherent detection (j-segment) correlation value calculation section 501-j has a similar configuration to that of non-coherent detection correlation value calculation section 202 shown in FIG.4 and calculates correlation values by non-coherent detection for j (j>2) segments.

Maximum value detection section 502 detects maximum correlation values from correlation values $\gamma_0^c$ to $\gamma_{15}^c$ calculated by coherent detection correlation value calculation section 201, correlation values $\gamma_0^{n,2}$ to $\gamma_{15}^{n,2}$ calculated by non-coherent detection correlation value calculation section 501-2 and correlation values $\gamma_0^{n,j}$ to $\gamma_{15}^{n,j}$ calculated by non-coherent detection correlation value calculation section 501-j.

Then, an operation of the preamble reception apparatus in the above configuration will be explained focused on differences from Embodiment 1 (FIG.2). First, a received signal is sent to coherent detection correlation value calculation section 201, non-coherent detection correlation value calculation section 501-2 to non-coherent detection correlation value calculation section 501-j. Coherent detection correlation value calculation section 201 calculates correlation values $\gamma_0^c$ to $\gamma_{15}^c$ by coherent detection for all signatures. The calculated correlation values are output to maximum value detection section 502.

Non-coherent detection correlation value calculation section 501-2 calculates correlation values $\gamma_0^{n,2}$ to $\gamma_{15}^{n,2}$ by non-coherent detection (number of segments j=2) for all signatures. The calculated correlation values are output to maximum value detection section 502.

Non-coherent detection correlation value calculation section 501-j calculates correlation values $\gamma_0^{n,j}$ to $\gamma_{15}^{n,j}$ by non-coherent detection (number of segments = j) for all signatures. The calculated correlation values are output to maximum value detection section 502. Here, non-coherent detection correlation value calculation section 501-j with more segments obtains large correlation values especially during high-speed fading. Non-coherent detection correlation value calculation section 501-2 with fewer segments obtains large correlation values especially during low-speed fading.

Maximum value detection section 203 detects a maximum correlation value from among correlation values $\gamma_0^c$ to $\gamma_{15}^c$, $\gamma_0^{n,2}$ to $\gamma_{15}^{n,2}$ and $\gamma_0^{n,j}$ to $\gamma_{15}^{n,j}$. The detected maximum correlation value is output to threshold determining section 204 together with the corresponding signature number. The operation of threshold determining section 204 is similar to that in Embodiment 1 (FIG.2) and detailed explanations thereof will be omitted.

As shown above, this embodiment calculates correlation values for all signatures according to a coherent detection system and a plurality of non-coherent detection systems with the number of segments differing from one another. This embodiment then detects a maximum correlation value from all calculated correlation values and determines whether the detected maximum correlation value is greater than a threshold or not. Then, for the signature corresponding to the maximum correlation value which has been determined to be greater than the threshold, this embodiment recognizes that the preamble corresponding to this signature has been received reliably. Furthermore, for the signature corresponding to the maximum correlation value which has been determined to be not greater than the threshold, this embodiment recognizes that the preamble corresponding to this signature has not been received reliably. Furthermore, it goes without saying that for any signature of all signatures other than the signature corresponding to the maximum correlation value, this embodiment recognizes that the preamble corresponding to this signature has not been received reliably.

Because of this, when the propagation environment is bad due to a large frequency offset or high-speed fading, even if a correlation value by coherent detection for a predetermined signature is small, it is highly probable that the correlation value by non-coherent detection for this predetermined signature has not decreased. As a result, it is possible to prevent the probability of detecting the preamble corresponding to this predetermined signature from deteriorating, which in turn can prevent the preambles corresponding to signatures other than this predetermined signature from being detected erroneously (in this case, it is naturally assumed that no preambles corresponding to signatures other than this predetermined signature have been sent by other mobile station apparatuses).

On the contrary, when the propagation environment is good because of a small frequency offset or low-speed fading, even if a correlation value by non-coherent detection for a predetermined signature is small, it is highly probable that the correlation value by coherent detection for this predetermined signature has increased.

As a result, it is possible to prevent the probability of detecting the preamble corresponding to this predetermined signature from deteriorating, which in turn can prevent the preambles corresponding to signatures other than this predetermined signature from being detected erroneously (in this case, it is naturally assumed that no preambles corresponding to signatures other than this predetermined signature have been sent by other mobile station apparatuses).

In addition, by calculating correlation values for all signatures by a plurality of non-coherent detections with the number of segments differing from one another, this embodiment can obtain a large correlation value for a predetermined signature independently of the fading speed. Thus, it is possible to maintain the probability of preamble detection and the probability of erroneous detection at a favorable level.

Thus, this embodiment can maintain the probability of preamble detection and the probability of erroneous detection at a favorable level independently of the propagation environment.

(Embodiment 3)

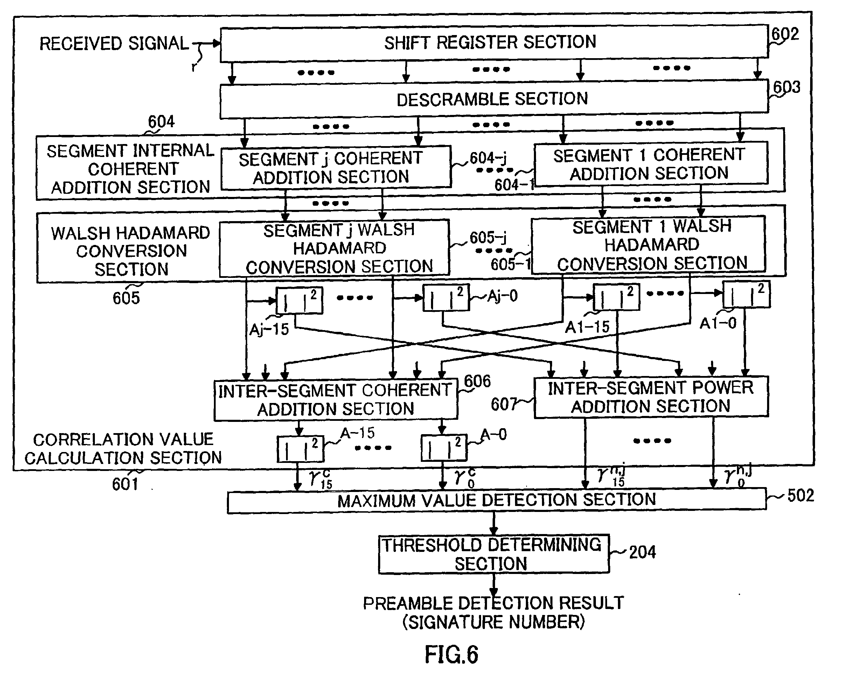

This embodiment will describe a case where correlation values for all signatures are calculated by coherent detection and non-coherent detection while preventing the scale of the apparatus from expanding with reference to FIG.6. FIG.6 is a block diagram showing a configuration of a preamble reception apparatus according to Embodiment 3 of the present invention. In FIG.6, the same configurations as those in Embodiment 2 (FIG.5) are assigned the same reference numerals in FIG.5 and detailed explanations thereof will be omitted.

The preamble reception apparatus shown in FIG.3 comprises correlation value calculation section 601 that calculates correlation values by coherent detection and non-coherent detection, maximum value detection section 502 and threshold determining section 204.

Correlation value calculation section 601 is provided with shift register section 602, descramble section 303, segment internal coherent addition section 604, Walsh Hadamard conversion section 605, inter-segment coherent addition section 606, inter-segment power addition section 607, and groups of 16 power calculation sections; power calculation sections A-0 to A-15, power calculation sections A1-0 to A1-15, ···, power calculation sections Aj-0 to Aj-15.

These configurations are equivalent to the configurations shown in FIG.3 and FIG.4. In this embodiment, segment internal coherent addition section 604 is provided with segment 1 coherent addition section 604-1 to segment j coherent addition section 604-j corresponding to 1 segment to j segments, respectively.

In correspondence with this, Walsh Hadamard conversion section 605 is provided with segment 1 Walsh Hadamard conversion section 605-1 to segment j Walsh Hadamard conversion section 605-j corresponding to 1 segment to j segments, respectively and the respective output sides are connected to inter-segment coherent addition section 606.

Power calculation sections A1-0 to A1-15, ···, Aj-0 to Aj-15 correspond to segment 1 to j above, respectively and the input sides are connected to the output sides of Walsh Hadamard conversion section 605-1 to segment j Walsh Hadamard conversion section 605-j and the output sides are connected to inter-segment power calculation section 607.

Inter-segment coherent addition section 606 is connected to maximum value detection section 502 via power calculation sections A-0 to A-15. Inter-segment power addition section 607 is directly connected to maximum value detection section 502. Maximum value detection section 502 is connected to threshold determining section 204.

An operation of the preamble reception apparatus in the above configuration will be explained only focused on differences from Embodiment 1 and Embodiment 2.

First, received signal r is input to shift register section 602 and the output of this shift register section 602 is descrambled by descramble section 603 and output to segment internal coherent addition section 604.

Segment internal coherent addition section 604 carries out a coherent addition in a segment and outputs this result to Walsh Hadamard conversion section 605.

Walsh Hadamard conversion section 605 converts the coherent addition result for every signature and outputs this conversion result to inter-segment coherent addition section 606 and at the same time, power calculation sections A1-0 to A1-15, ···, Aj-0 to Aj-15 calculate the squares of absolute values to convert the calculation results to power and output to inter-segment power addition section 607.

Inter-segment coherent addition section 606 performs a coherent addition on the conversion results corresponding to j segments for every signature, and then power calculation sections A-0 to A-15 convert the coherent addition result for every signature to power and obtains correlation values and output these correlation values to maximum value detection section 502.

Inter-segment power addition section 607 adds up power corresponding to j segments for every signature and outputs the correlation values obtained to maximum value detection section 502. Hereafter, maximum value detection section 502 and threshold determining section 204 carry out processing similar to that described in Embodiment 2.

As shown above, in this embodiment, the section that calculates correlation values by coherent detection and the section that calculates correlation values by non-coherent detection share at least part of the configuration necessary for calculations of correlation values. More specifically, these sections share shift register section 602, descramble section 603, segment internal addition section 604 and Walsh Hadamard conversion section 605 when carrying out coherent detection and non-coherent detection. Thus, according to this embodiment compared to the preamble reception apparatus according to Embodiment 1 and Embodiment 2, it is possible to reduce the scale of the apparatus without deteriorating the performance with respect to the probability of preamble detection and the performance with respect to the probability of erroneous detection of preambles.

This embodiment has described the case where non-coherent detection of j segments is performed as an example of non-coherent detection, but it is also possible to carry out a plurality of non-coherent detections with the number of segments differing from one another as non-coherent detection. In this case, it is further possible to obtain large correlation values for predetermined signatures irrespective of the fading speed.

This embodiment has described the case where the section that calculates correlation values by coherent detection and the section that calculates correlation values by non-coherent detection share shift register section 602, descramble section 603, segment internal addition section 604 and Walsh Hadamard conversion section 605, but it goes without saying that it is also possible for the section that calculates correlation values by coherent detection and the section that calculates correlation values by non-coherent detection to share at least one of the above-described sections.

(Embodiment 4)

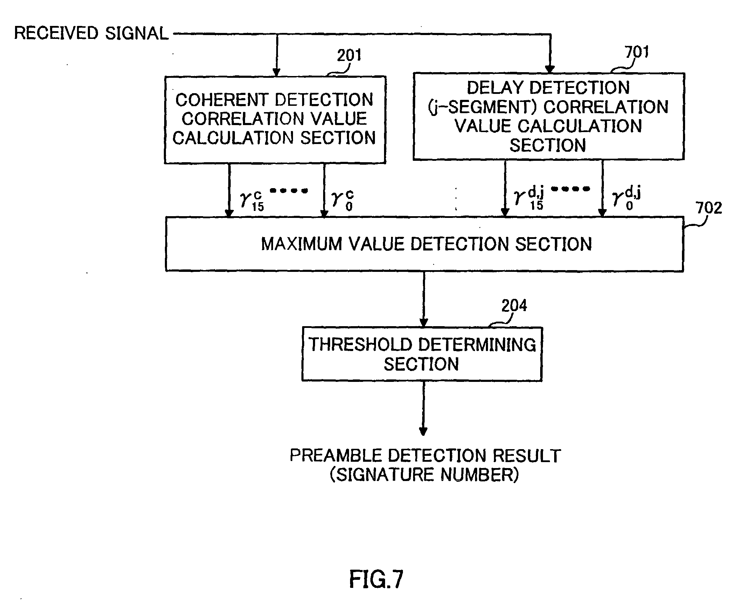

This embodiment will describe a case where correlation values for all signatures are calculated according to two systems; coherent detection and delay detection with reference to FIG.7. FIG.7 is a block diagram showing a configuration of a preamble reception apparatus according to Embodiment 4 of the present invention. In FIG.7, the same configurations as those in Embodiment 1 (FIG.2) are assigned the same reference numerals in FIG.2 and detailed explanations thereof will be omitted.

The preamble reception apparatus shown in FIG.7 comprises coherent detection correlation value calculation section 201, delay detection (j-segment) correlation value calculation section 701, maximum value detection section 702 and threshold determining section 204.

Delay detection (j-segment) correlation value calculation section 402 calculates correlation values of j segments by delay detection. Maximum value detection section 702 detects maximum correlation values from among correlation values $\gamma_0^c$ to $\gamma_{15}^c$ calculated by coherent detection and correlation values $\gamma_0^{d,j}$ to $\gamma_{15}^{d,j}$ calculated by delay detection.

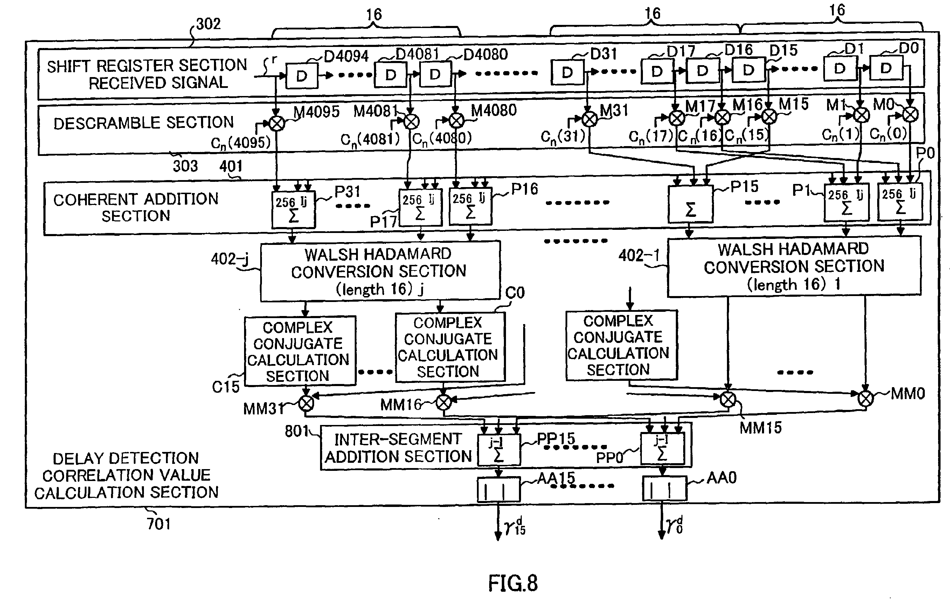

FIG.8 is a block diagram showing a configuration of delay detection correlation value calculation section 701 in the preamble reception apparatus according to Embodiment 4 of the present invention. In FIG.8, the same configurations as those in FIG.3 (FIG.4) are assigned the same reference numerals in FIG.3 (FIG.4) and detailed explanations thereof will be omitted.

Correlation value calculation section 701 shown in FIG.8 has a configuration of calculating correlation values of j segments (the number of segments is assumed to be j=2 in this embodiment) by delay detection and is provided with shift register section 302, descramble section 303, coherent addition section 401, Walsh Hadamard conversion sections 402-1 and 402-j, complex conjugate calculation sections C0 to C15, multipliers MM0 to MM31, inter-segment addition section 801 including adders PP0 to PP15 and absolute value calculation sections AA0 to AA15.

An operation of the preamble reception apparatus in the above configuration will be explained only focused on differences from Embodiment 1 to Embodiment 3 with reference to FIG.7.

First, a received signal is input to coherent detection correlation value calculation section 201 and delay detection (j-segment) correlation value calculation section 701. Coherent detection correlation value calculation section 201 calculates correlation values $\gamma_0^c$ to $\gamma_{15}^c$ by coherent detection for all signatures. Calculated correlation values $\gamma_0^c$ to $\gamma_{15}^c$ are output to maximum value detection section 702. Delay detection correlation value calculation section 701 calculates correlation values $\gamma_0^{d,j}$ to $\gamma_{15}^{d,j}$ by delay detection for all signatures. Calculated correlation values $\gamma_0^{d,j}$ to $\gamma_{15}^{d,j}$ are output to maximum value detection section 702.

Here, an operation of delay detection correlation value calculation section 701 will be explained only focused on differences from Embodiment 1 to Embodiment 3 with reference to FIG.8. Walsh Hadamard conversion section 402-j carries out a Walsh Hadamard conversion for every addition result of adders P16 to P31, that is, for every signature $h_m$ and outputs these results to complex conjugate calculation sections C0 to C15. Complex conjugate calculation sections C0 to C15 calculate a complex conjugate of the conversion result and output this result to multipliers MM0 to MM15. Multipliers MM0 to MM15 multiply the calculation result of the complex conjugate by the conversion result from Walsh Hadamard conversion section 402-1 and output the multiplication result to inter-segment addition section 801.

In inter-segment addition section 801, adders PP0 to PP15 add up power values corresponding to j-1 segments for every signature $h_m$ (since j-1=1, no addition is performed in this embodiment) and these addition results are output to absolute value calculation sections AA0 to AA15.

Absolute value calculation sections AA0 to AA15 calculate absolute values of the respective addition results and thereby calculate correlation values $\gamma_0^d$ to $\gamma_{15}^d$ by delay detection. The correlation values calculated by absolute value calculation sections AA0 to AA15 are expressed by expression (5) below, where $\gamma_m^d$ corresponds to the correlation value for mth signature hm by delay detection in the case where the number of segments carrying out a coherent addition is j:

$$\gamma_m^d = \left| \sum_{i=1}^{j-1} \left[ \left\{ \sum_{l=0}^{256/j-1} y_m \left( l + (256/j) \cdot i \right) \right\} \left\{ \sum_{l=0}^{256/j-1} y_m \left( l + (256/j) \cdot (i-1) \right) \right\}^{\bullet} \right] \right| \qquad (5)$$

This completes the explanation of the operation of delay detection correlation value calculation section 701.

Maximum value detection section 702 calculates a maximum correlation value from among correlation values $\gamma_0^c$ to $\gamma_{15}^c$ calculated by coherent detection correlation value calculation section 201 and correlation values $\gamma_0^{d,j}$ to $\gamma_{15}^{d,j}$ calculated by delay detection correlation value calculation section 701. The detected maximum correlation value is output to threshold determining section 204 together with the signature number corresponding to this maximum correlation value. The operation of threshold determining section 204 is the same as that in Embodiment 1 (FIG.2) and detailed explanations thereof are omitted.

As shown above, this embodiment calculates correlation values for all signatures according to both coherent detection system and delay detection system. Furthermore, this embodiment detects a maximum correlation value from among all the calculated correlation values and determines whether the detected maximum correlation value is greater than a threshold or not. Hereafter, for the signature corresponding to the maximum correlation value determined to be greater than the threshold, this embodiment recognizes that the preamble corresponding to this signature has been received reliably. Furthermore, for the signature corresponding to the maximum correlation value determined to be not greater than the threshold, this embodiment recognizes that the preamble corresponding to this signature has not been received reliably. Furthermore, it goes without saying that for any signature of all signatures other than the signature corresponding to the maximum correlation value, this embodiment recognizes that the preamble corresponding to this signature has not been received reliably.

Thus, when the propagation environment is bad due to a large frequency offset or high-speed fading, even if a correlation value by coherent detection for a predetermined signature is small, it is highly probable that the correlation value for this predetermined signature by non-coherent detection has not decreased.

As a result, it is possible to prevent the probability of detecting the preamble corresponding to this predetermined signature from deteriorating, which in turn can prevent the preambles corresponding to signatures other than this predetermined signature from being detected erroneously (in this case, it is naturally assumed that no preambles corresponding to signatures other than this predetermined signature have been sent by other mobile station apparatuses).

On the contrary, when the propagation environment is good because of a small frequency offset or low-speed fading, even if a correlation value for a predetermined signature by non-coherent detection is small, it is highly probable that the correlation value for this predetermined signature by coherent detection has increased. As a result, it is possible to prevent the probability of detecting the preamble corresponding to this predetermined signature from deteriorating, which in turn can prevent the preambles corresponding to signatures other than this predetermined signature from being detected erroneously (in this case, it is naturally assumed that no preambles corresponding to signatures other than this predetermined signature have been sent by other mobile station apparatuses).

Thus, according to this embodiment, it is possible to maintain the probability of detecting preambles and the probability of erroneous detection at a favorable level irrespective of the propagation environment.

(Embodiment 5)

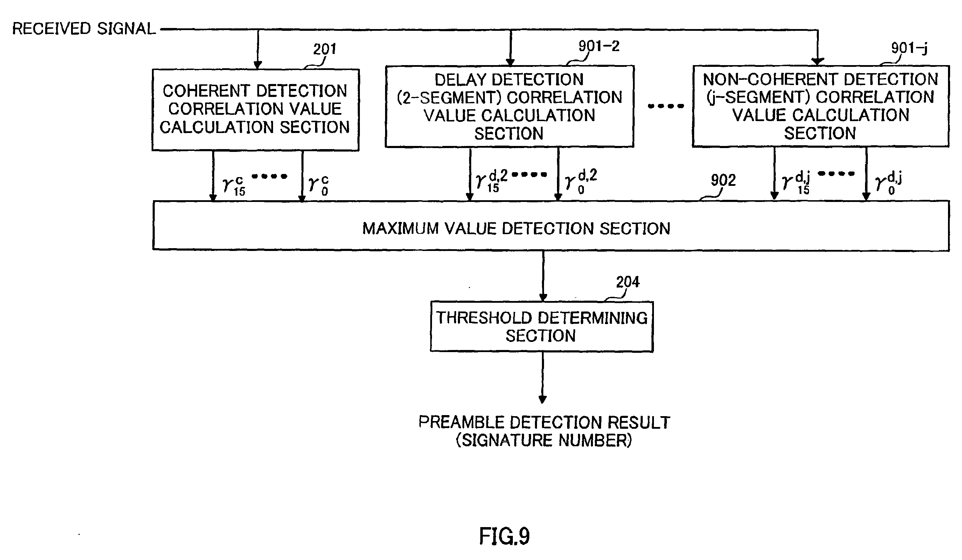

This embodiment will describe a case where correlation values for all signatures are calculated according to a coherent detection system and delay detection systems with the number of segments differing from one another with reference to FIG.9. FIG.9 is a block diagram showing a configuration of a preamble reception apparatus according to Embodiment 5 of the present invention. In FIG.9, the same configurations as those in Embodiment 1 (FIG.2) are assigned the same reference numerals in FIG.2 and detailed explanations thereof will be omitted.

The preamble reception apparatus shown in FIG.5 comprises coherent detection correlation value calculation section 201, delay detection (2-segment) correlation value calculation section 901-2 to delay detection (j-segment) correlation value calculation section 901-j with 2 to j segments respectively, maximum value detection section 902 and threshold determining section 204.

Delay detection (2-segment) correlation value calculation section 901-2 has a configuration similar to that of delay detection correlation value calculation section 701 shown in FIG.8 and calculates correlation values for 2 segments by delay detection. Here, this delay detection correlation value calculation section 901-2 has a configuration with j=2 in FIG.8.

Delay detection (j-segment) correlation value calculation section 901-j has a configuration similar to that of delay detection correlation value calculation section 701 shown in FIG.8 and calculates correlation values for j (>2) segments by delay detection.

Maximum value detection section 902 detects maximum correlation values from among correlation values $\gamma_0^c$ to $\gamma_{15}^c$ calculated by coherent detection correlation value calculation section 201, correlation values $\gamma_0^{d,2}$ to $\gamma_{15}^{d,2}$ calculated by delay detection correlation value calculation section 901-2 and correlation values $\gamma_0^{d,j}$ to $\gamma_{15}^{d,j}$ calculated by delay detection correlation value calculation section 901-j.

An operation of the preamble reception apparatus in the above configuration will be explained only focused on differences from Embodiment 1 to Embodiment 4.

First, a received signal is sent to coherent detection correlation value calculation section 201, delay detection (2-segment) correlation value calculation section 901-2 and delay detection (j-segment) correlation value calculation section 901-j.

Coherent detection correlation value calculation section 201 calculates correlation values $\gamma_0^c$ to $\gamma_{15}^c$ for all signatures by coherent detection. The calculated correlation values are output to maximum value detection section 902.

Non-coherent detection correlation value calculation section 901-2 calculates correlation values $\gamma_0^{d,2}$ to $\gamma_{15}^{d,2}$ for all signatures by delay detection (number of segments = 2). The calculated correlation values are output to maximum value detection section 902.

Non-coherent detection correlation value calculation section 901-j calculates correlation values $\gamma_0^{d,j}$ to $\gamma_{15}^{d,j}$ for all signatures by delay detection (number of segments = j). The calculated correlation values are output to maximum value detection section 902. Here, delay detection correlation value calculation section 901-j having more segments can obtain large correlation values especially during high-speed fading. Delay detection correlation value calculation section 901-j having fewer segments can obtain large correlation values especially during low-speed fading.

Maximum value detection section 902 detects a maximum correlation value from among correlation values $\gamma_0^c$ to $\gamma_{15}^c$, correlation values $\gamma_0^{d,2}$ to $\gamma_{15}^{d,2}$ and correlation values $\gamma_0^{d,j}$ to $\gamma_{15}^{d,j}$. The maximum correlation value detected by maximum value detection section 902 is output to threshold determining section 104 together with the signature number corresponding to this maximum correlation value. The operation of threshold determining section 204 is similar to that in Embodiment 1 (FIG.2) and detailed explanations thereof will be omitted.

As shown above, this embodiment calculates correlation values for all signatures according to a coherent detection system and a plurality of delay detection systems with the number of segments differing from one another. This embodiment further detects a maximum correlation value from among all calculated correlation values and determines whether the detected maximum correlation value is greater than a threshold or not. Hereafter, for the signature corresponding to the maximum correlation value determined to be greater than the threshold, this embodiment recognizes that the preamble corresponding to this signature has been received reliably. Furthermore, for the signature corresponding to the maximum correlation value determined to be not greater than the threshold, this embodiment recognizes that the preamble corresponding to this signature has not been received reliably. Furthermore, it goes without saying that for any signature of all signatures other than the signature corresponding to the maximum correlation value, this embodiment recognizes that the preamble corresponding to this signature has not been received reliably.

Thus, when the propagation environment is bad due to a large frequency offset or high-speed fading, even if a correlation value by coherent detection for a predetermined signature is small, it is highly probable that the correlation value for this predetermined signature by delay detection has not decreased. As a result, it is possible to prevent the probability of detecting the preamble corresponding to this predetermined signature from deteriorating, which in turn can prevent the preambles corresponding to signatures other than this predetermined signature from being detected erroneously (in this case, it is naturally assumed that no preambles corresponding to signatures other than this predetermined signature have been sent by other mobile station apparatuses).

On the contrary, when the propagation environment is good because of a small frequency offset or low-speed fading, even if a correlation value for a predetermined signature by delay detection is small, it is highly probable that the correlation value for this predetermined signature by coherent detection has increased. As a result, it is possible to prevent the probability of detecting the preamble corresponding to this predetermined signature from deteriorating, which in turn can prevent the preambles corresponding to signatures other than this predetermined signature from being detected erroneously (in this case, it is naturally assumed that no preambles corresponding to signatures other than this predetermined signature have been sent by other mobile station apparatuses).

In addition, by calculating correlation values for all signatures by a plurality of delay detections with the number of segments differing from one another, this embodiment can obtain a large correlation value for a predetermined signature independently of the fading speed.

Thus, it is possible to maintain the probability of detecting preambles and the probability of erroneous detection at a favorable level.

Thus, this embodiment can maintain the probability of detecting preambles and the probability of erroneous detection at a favorable level independently of the propagation environment.

(Embodiment 6)

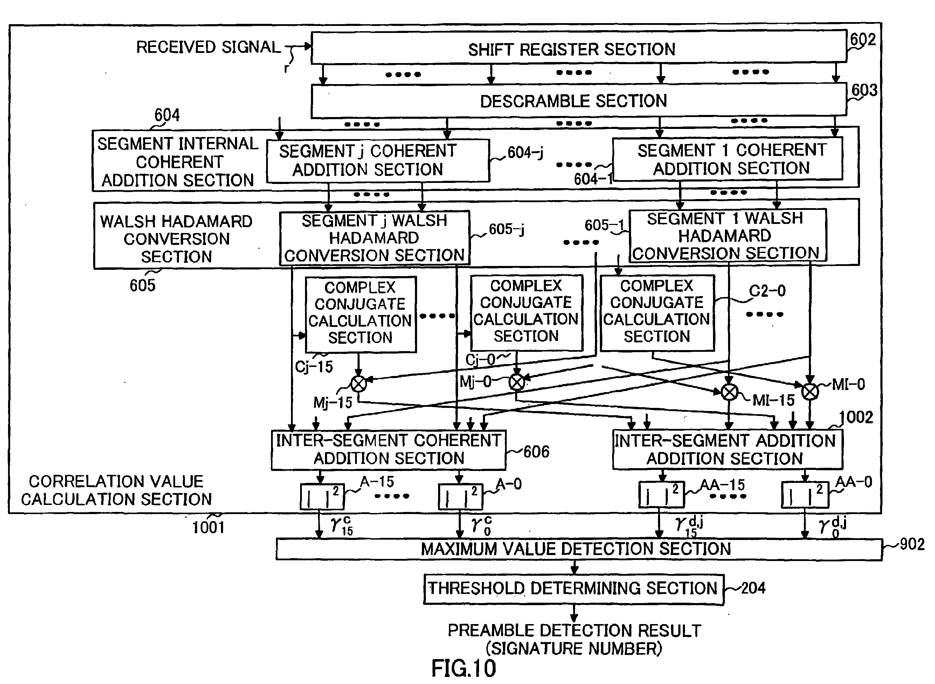

This embodiment will describe a case where correlation values for all signatures are calculated by coherent detection and delay detection with reference to FIG.10. FIG.10 is a block diagram showing a configuration of a preamble reception apparatus according to Embodiment 6 of the present invention. In FIG.10, the same configurations as those in Embodiment 3 (FIG.6) are assigned the same reference numerals in FIG.6 and FIG.9 and detailed explanations thereof will be omitted.

The preamble reception apparatus shown in FIG.10 comprises correlation value calculation section 1001 that carries out correlation values by coherent detection and delay detection, maximum value detection section 902 and threshold determining section 204.

Correlation value calculation section 1001 is provided with shift register section 602, descramble section 603, segment internal coherent addition section 604, Walsh Hadamard conversion section 605, segment inter-segment coherent addition section 606, inter-segment addition section 1002, groups of complex conjugate calculation sections C2-0 to C2-15 (not shown) to Cj-0 to Cj-15, each group consisting of 16 complex conjugate calculation sections, multipliers MI-0 to MI-15 to Mj-0 to Mj-15 and absolute value calculation sections AA-0 to AA-15 and A-0 to A-15.

These configurations are equivalent to the configurations shown in FIG.3 and FIG.8. In this embodiment, segment internal coherent addition section 604 is provided with segment 1 coherent addition section 604-1 to segment j coherent addition section 604-j corresponding to 1 to j segments, respectively.

In correspondence with this, Walsh Hadamard conversion section 605 is provided with segment 1 Walsh Hadamard conversion section 605-1 to segment j Walsh Hadamard conversion section 605-j corresponding to 1 to j segments, respectively and the output sides are connected to inter-segment coherent addition section 606.

Complex conjugate calculation sections C2-0 to C2-15 to Cj-0 to Cj-15 correspond to above segments 2 to j and the input sides are connected to the output sides of segment 2 Walsh Hadamard conversion section 605-2 (not shown) to segment j Walsh Hadamard conversion section 605-j, and the output sides are connected to inter-segment addition section 1002.

Inter-segment coherent addition section 606 is connected to maximum value detection section 902 via absolute value calculation sections A-0 to A-15 and inter-segment addition section 1002 is connected to maximum value detection section 902 via absolute value calculation sections AA-0 to AA-15. Maximum value detection section 602 is also connected to threshold determining section 303.

An operation of the preamble reception apparatus in the above configuration will be explained.

First, received signal r is in put to shift register section 602 and the output of this shift register section 602 is descrambled at descramble section 603 and output to segment internal coherent addition section 604. Segment internal coherent addition section 604 carries out a coherent addition in a segment and outputs this result to Walsh Hadamard conversion section 605.

Walsh Hadamard conversion section 605 carries out a conversion for every signature and outputs this conversion result to inter-segment coherent addition section 606. Complex conjugate calculation sections C2-0 to C2-15 to Cj-0 to Cj-15 take complex conjugates of this conversion result and multipliers M2-0 to M2-0 to Mj-0 to Mj-15 multiply this result by the result of the adjacent segments with the same sequence and output the multiplication result to inter-segment addition section 1002.

Inter-segment coherent addition section 606 carries out a coherent addition corresponding to j segments for every signature on the above conversion result and then absolute value calculation sections A-0 to A-15 convert the coherent addition result for every signature to power to obtain a correlation value. This correlation value is output to maximum value detection section 902.

Inter-segment addition section 1002 adds up complex conjugates corresponding to j-1 segments for every signature and then absolute value calculation sections AA-0 to AA-15 convert the coherent addition result for every signature to power to obtain a correlation value. The correlation value obtained is output to maximum value detection section 902.

Hereafter, maximum value detection section 902 and threshold determining section 204 carry out processing similar to that described in Embodiment 5.

As shown above, according to this embodiment, the section that calculates correlation values by coherent detection and the section that calculates correlation values by delay detection share at least part of the configuration necessary to calculate correlation values. More specifically, when carrying out coherent detection and j-segment delay detection, these sections share shift register section 602, descramble section 603, segment internal coherent addition section 604 and Walsh Hadamard conversion section 605. Thus, according to this embodiment, it is possible to reduce the scale of the apparatus without deteriorating the performance with respect to the probability of detection of preambles and the performance with respect to the probability of erroneous detection of preambles compared to the preamble reception apparatus according to Embodiment 4 and Embodiment 5.

This embodiment has described the case where non-coherent detection of j segments is performed as an example of non-coherent detection as delay detection, but it is also possible to carry out a plurality of delay detections with the number of segments differing from one another as delay detection. In this case, it is further possible to obtain large correlation values for predetermined signatures irrespective of the fading speed.

This embodiment has described the case where the section that calculates correlation values by coherent detection and the section that calculates correlation values by delay detection share shift register section 602, descramble section 603, segment internal coherent addition section 604 and Walsh Hadamard conversion section 605, but it goes without saying that it is also possible for the section that calculates correlation values by coherent detection and the section that calculates correlation values by delay detection to share at least one of the above-described sections.

The embodiment above has described the case where the mobile station apparatus sends the preamble shown in FIG.1 to the base station apparatus, but the mobile station apparatus can send the preamble shown in FIG. 1 with an appropriate change added to the base station apparatus, provided that the base station apparatus can perform coherent detection, non-coherent detection and delay detection.

The embodiment above has described the case where at least two kinds of detection of coherent detection, non-coherent detection and delay detection are used as a plurality of detection processes, but detections other than these processes can also be used as a plurality of detection processes.

As is apparent to those interested in the art, the present invention can be implemented using a commercially available general digital computer or microprocessor programmed according to the art described in the above-described embodiments. As is apparent to those interested in the art, the present invention includes a computer program created by those interested in the art based on the art described in the above-described embodiments.

The scope of the present invention includes a computer program product which is a recording medium including instructions that can be used to program the computer that implements the present invention. This recording medium corresponds to disks such as a floppy disk, optical disk, CD-ROM and magnetic disk, and ROM, RAM, EPROM, EEPROM, magneto-optic card, memory card or DVD, etc., but the present invention is not limited to these media.

This application is based on the Japanese Patent Application No.2000-065008 filed on March 9, 2000, entire content of which is expressly incorporated by reference herein.

Industrial Applicability

The present invention is ideally applicable to the field of preamble reception apparatuses mounted on a mobile station apparatus (communication terminal apparatus) that carries out random access using predetermined signatures and base station apparatus in a mobile communication system.

**Claims**

1. A preamble reception apparatus comprising:

   receiving means for receiving through a propagation path a communication start request signal generated by a communication terminal apparatus using a signal specific to said communication terminal apparatus from among known signals; and
   detecting means for calculating a correlation value for each known signal for every detection process by a plurality of mutually different detection processes using the signal received by said receiving means.

2. The preamble reception apparatus according to claim 1, wherein the detecting means uses a coherent detection process and non-coherent detection process as the plurality of mutually different detection processes.

3. The preamble reception apparatus according to claim 2, wherein the non-coherent detecting means calculates a correlation value for each known signal by a plurality of non-coherent detection processes with the number of segments differing from one another.

4. The preamble reception apparatus according to claim 2, wherein the coherent detecting means and non-coherent detecting means share at least part of the configuration necessary to calculate correlation values.

5. The preamble reception apparatus according to claim 1, wherein the detecting means uses coherent detection processes and delay detection processes as the plurality of mutually different detection processes.

6. The preamble reception apparatus according to claim 5, wherein the delay detecting means calculates a correlation value for each known signal by a plurality of non-coherent detection processes with the number of segments differing from one another.

7. The preamble reception apparatus according to claim 5, wherein the coherent detecting means and delay detecting means share at least part of the configuration necessary to calculate correlation values.

8. A base station apparatus equipped with a preamble reception apparatus, said preamble reception apparatus comprising:

   receiving means for receiving through a propagation path a communication start request signal generated by a communication terminal apparatus using a signal specific to said communication terminal apparatus from among known signals; and
   detecting means for calculating a correlation value for each known signal for every detection process by a plurality of mutually different detection processes using the signal received by said receiving means.

9. The base station apparatus according to claim 8, wherein the detecting means uses coherent detection processes and non-coherent detection processes as the plurality of mutually different detection processes.

10. The base station apparatus according to claim 8, wherein the detecting means uses coherent detection processes and delay detection processes as the plurality of mutually different detection processes.

11. A communication terminal apparatus that carries out radio communications with a base station apparatus equipped with a preamble reception apparatus, said preamble reception apparatus comprising:

   receiving means for receiving through a propagation path a communication start request signal generated by a communication terminal apparatus using a signal specific to said communication terminal apparatus from among known signals; and
   detecting means for calculating a correlation value for each known signal for every detection process by a plurality of mutually different detection processes using the signal received by said receiving means.

12. A preamble reception method comprising:

   a receiving step of receiving through a propagation path a communication start request signal generated by a communication terminal apparatus using a signal specific to said communication terminal apparatus from among known signals; and
   a detecting step of or calculating a correlation value for each known signal for every detection process by a plurality of mutually different detection processes using the signal received in said receiving step.

PREAMBLE

SCRAMBLING CODE $c_n$

4096 CHIPS

16 CHIPS

$h_m$ $h_m$ $h_m$ $h_m$ ... $h_m$ $h_m$ $h_m$ $h_m$

$256 \times 16$ CHIPS

FIG.1

RECEIVED SIGNAL

COHERENT DETECTION
CORRELATION VALUE
CALCULATION SECTION
201

NON-COHERENT DETECTION
(j-SEGMENT) CORRELATION
VALUE CALCULATION
SECTION
202

$\gamma^c_{15}$ •••• $\gamma^c_0$

$\gamma^{n,j}_{15}$ •••• $\gamma^{n,j}_0$

203

MAXIMUM VALUE DETECTION SECTION

204

THRESHOLD DETERMINING
SECTION

PREAMBLE DETECTION RESULT
(SIGNATURE NUMBER)

FIG.2

EP 1 178 638 A1

FIG.3

EP 1 178 638 A1

FIG.4

| COHERENT DETECTION CORRELATION VALUE CALCULATION SECTION | NON-COHERENT DETECTION (2-SEGMENT) CORRELATION VALUE CALCULATION SECTION | •••• | NON-COHERENT DETECTION (j-SEGMENT) CORRELATION VALUE CALCULATION SECTION |

201

501-2

501-j

$r_{15}^{c}$ •••• $r_{0}^{c}$     $r_{15}^{n,2}$ •••• $r_{0}^{n,2}$     502     $r_{15}^{n,j}$ •••• $r_{0}^{n,j}$

MAXIMUM VALUE DETECTION SECTION

204

THRESHOLD DETERMINING SECTION

PREAMBLE DETECTION RESULT
(SIGNATURE NUMBER)

FIG.5

EP 1 178 638 A1

19

FIG.6

FIG.7

Components shown:

RECEIVED SIGNAL

201 — COHERENT DETECTION CORRELATION VALUE CALCULATION SECTION

$\gamma_{15}^{c} \cdots \gamma_{0}^{c}$

701 — DELAY DETECTION ($j$-SEGMENT) CORRELATION VALUE CALCULATION SECTION

$\gamma_{15}^{dj} \cdots \gamma_{0}^{dj}$

702 — MAXIMUM VALUE DETECTION SECTION

204 — THRESHOLD DETERMINING SECTION

PREAMBLE DETECTION RESULT (SIGNATURE NUMBER)

FIG.8

SHIFT REGISTER SECTION

RECEIVED SIGNAL

DESCRAMBLE SECTION

COHERENT ADDITION SECTION

WALSH HADAMARD CONVERSION SECTION (length 16) 1

WALSH HADAMARD CONVERSION SECTION (length 16) j

COMPLEX CONJUGATE CALCULATION SECTION

INTER-SEGMENT ADDITION SECTION

DELAY DETECTION CORRELATION VALUE CALCULATION SECTION

$C_n(0)$, $C_n(1)$, $C_n(15)$, $C_n(16)$, $C_n(17)$, $C_n(31)$, $C_n(4080)$, $C_n(4081)$, $C_n(4095)$

$\sum_{ij}^{256}$

$r_0^d$, $r_{15}^d$

RECEIVED SIGNAL

```
┌─────────────────────┐      ┌─────────────────────┐         ┌─────────────────────┐
│      201            │      │      901-2          │         │      901-j          │
│ COHERENT DETECTION  │      │ DELAY DETECTION     │         │ NON-COHERENT        │
│ CORRELATION VALUE   │      │ (2-SEGMENT)         │  ····   │ DETECTION           │
│ CALCULATION SECTION │      │ CORRELATION VALUE   │         │ (j-SEGMENT)         │
│                     │      │ CALCULATION SECTION │         │ CORRELATION VALUE   │
│                     │      │                     │         │ CALCULATION SECTION │
└─────────────────────┘      └─────────────────────┘         └─────────────────────┘
```

$r^c_{15}$ ···· $r^c_0$      $r^{d,2}_{15}$ ···· $r^{d,2}_0$      902      $r^{d,j}_{15}$ ···· $r^{d,j}_0$

MAXIMUM VALUE DETECTION SECTION

204

THRESHOLD DETERMINING SECTION

PREAMBLE DETECTION RESULT
(SIGNATURE NUMBER)

FIG.9

EP 1 178 638 A1

RECEIVED SIGNAL $r$

SHIFT REGISTER SECTION ~602

DESCRAMBLE SECTION ~603

604 SEGMENT INTERNAL COHERENT ADDITION SECTION

SEGMENT j COHERENT ADDITION SECTION ~604-j

SEGMENT 1 COHERENT ADDITION SECTION ~604-1

WALSH HADAMARD CONVERSION SECTION ~605

SEGMENT j WALSH HADAMARD CONVERSION SECTION ~605-j

605-1 SEGMENT 1 WALSH HADAMARD CONVERSION SECTION

COMPLEX CONJUGATE CALCULATION SECTION

COMPLEX CONJUGATE CALCULATION SECTION

COMPLEX CONJUGATE CALCULATION SECTION

C2-0

Cj-15 Cj-0

Mj-0 Ml-0

Mj-15 Ml-15

1002

INTER-SEGMENT COHERENT ADDITION SECTION ~606

INTER-SEGMENT ADDITION ADDITION SECTION

CORRELATION VALUE CALCULATION SECTION

1001

$| \ |^2$ A-15

$| \ |^2$ A-0

$| \ |^2$ AA-15

$| \ |^2$ AA-0

$\gamma_{15}^{c}$ $\gamma_{0}^{c}$ $\gamma_{15}^{d,j}$ $\gamma_{0}^{d,j}$

MAXIMUM VALUE DETECTION SECTION ~902

THRESHOLD DETERMINING SECTION ~204

PREAMBLE DETECTION RESULT (SIGNATURE NUMBER)

FIG.10

EP 1 178 638 A1

| INTERNATIONAL SEARCH REPORT | International application No. |
|---|---|
| | PCT/JP01/01808 |

A. CLASSIFICATION OF SUBJECT MATTER
Int.Cl$^7$   H04L 27/00
Int.Cl$^7$   H04J 13/00
Int.Cl$^7$   H04Q 7/38

According to International Patent Classification (IPC) or to both national classification and IPC

B. FIELDS SEARCHED

Minimum documentation searched (classification system followed by classification symbols)
Int.Cl$^7$   H04L 27/00
Int.Cl$^7$   H04J 13/00
Int.Cl$^7$   H04Q 7/38

Documentation searched other than minimum documentation to the extent that such documents are included in the fields searched
Jitsuyo Shinan Koho         1926-2001     Toroku Jitsuyo Shinan Koho  1994-2001
Kokai Jitsuyo Shinan Koho   1971-2001

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP, 10-178386, A (Fujitsu Limited), 30 June, 1998 (30.06.98), Fig. 1; esp., see Par. No.13  (Family: none) | 1,5,8,10,11,12 |
| Y | JP, 11-17651, A (New Japan Radio Co., Ltd.), 22 January, 1999 (22.01.99), Fig. 1; esp., see Par. No.34  (Family: none) | 1,5,8,10,11,12 |
| Y | JP, 08-46652, A (Matsushita Electric Ind. Co., Ltd.), 16 February, 1996 (16.02.96), Fig. 1; esp., see Par. No.9  (Family: none) | 1,5,8,10,11,12 |
| EA | JP, 2001-69576, A (Texas Instruments Inc.), 16 March, 2001 (16.03.01), Figs. 5 to 9  (Family: none) | 1-12 |
| A | JP, 11-261470, A (Toshiba Corporation), 24 September, 1999 (24.09.99), Fig. 4  (Family: none) | 1-12 |

☐  Further documents are listed in the continuation of Box C.     ☐  See patent family annex.

| * Special categories of cited documents: | "T" later document published after the international filing date or |
|---|---|
| "A" document defining the general state of the art which is not considered to be of particular relevance | priority date and not in conflict with the application but cited to understand the principle or theory underlying the invention |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 23 April, 2001 (23.04.01) | 01 May, 2001 (01.05.01) |

| Name and mailing address of the ISA/ | Authorized officer |
|---|---|
| Japanese Patent Office | |
| Facsimile No. | Telephone No. |

Form PCT/ISA/210 (second sheet) (July 1992)